# EUROPEAN PATENT SPECIFICATION

(11) **EP 4 592 264 B1**
(45) Date of publication and mention of the grant of the patent: **17.06.2026**
(21) Application number: 24153702.6
(22) Date of filing: 24.01.2024
(51) Int. Cl.: C04B 28/02, C04B 28/10, C04B 38/02

(54) **METHOD FOR PRODUCING A LIGHT-WEIGHT CONSTRUCTION MATERIAL AND A LIGHT-WEIGHT CONSTRUCTION MATERIAL**
VERFAHREN ZUR HERSTELLUNG EINES LEICHTBAUMATERIALS UND LEICHTBAUMATERIAL
PROCÉDÉ DE FABRICATION D'UN MATÉRIAU DE CONSTRUCTION LÉGER ET MATÉRIAU DE CONSTRUCTION LÉGER

(43) Date of publication of application: 30.07.2025
(73) Proprietor: Hitachi Energy Ltd, 8050 Zürich (CH)
(72) Inventor: SEKULA, Robert, 30-613 Krakow (PL); KMITA, Grzegorz, 32-085 Giebultow (PL); KASZA, Krzysztof, 31-154 Krakow (PL)
(74) Representative: Epping - Hermann - Fischer

(56) References cited:
- CN-A- 108 658 524
- CN-A- 117 383 884

## Description

The present disclosure relates to a method for producing a light-weight construction material. The background art document CN117383884A discloses an aerated concrete block.

Embodiments of the disclosure relate to an improved method for producing a light-weight construction material.

This is achieved by the subject-matter of the independent claim. Further embodiments are evident from the dependent claims and the following description.

According to an embodiment of the method, the method for producing a light-weight construction material comprises providing a power product component wherein the power product component comprises at least a polymer and aluminum. The power product component can be a high voltage power component. In addition, the power product component can be an electrical insulation material from high voltage power components with, for example, a conductor. Preferably, the power product component is an electrically insulating material. In particular, the power product component is a bushing or dry transformer coil in which, for example, an aluminum conductor is embedded.

The power product component comprises at least a polymer and aluminum. The polymer is a substance or a material consisting of very large molecules, called macromolecules, composed of many repeating subunits. The polymer is, for example, a synthetic plastic or a natural biopolymer. Polymers, both natural and synthetic, are created via polymerization of many small molecules, known as monomers. The advantage of using polymers in the power product component is that they have electrically insulating properties.

The aluminum in the power product component is preferably in the form of an aluminum foil, an aluminum strips, an aluminum paste, aluminum powder and/or an aluminum conductor. Advantageously, the aluminum is an expansion agent for the formation of gas bubbles in the light-weight construction material. In addition, the aluminum leads to a bonding process of the light-weight construction material. The aluminum provides some specific properties, such as high porosity and homogeneity, which determine the performance properties.

According to an embodiment of the method, the method further comprises pulverizing the power product component to form particles. Pulverizing includes a process of grinding, crushing and milling. The need for additional grinding is determined depending on the grain size. In other words, the power product component is crushed and ground to the desired granulation, possibly without prior separation. This leads to a particularly cost-effective and environmentally friendly method.

According to an embodiment of the method, the power product component further comprises further compounds and/or elements. For example, the power product component comprises silica filler, crepe paper, glass fiber meshes, quartz flour and polymer films. The further components, in other words the residues of other materials in the power product component, may, after pulverizing, constitute a mechanically reinforcing phase for the light-weight construction material.

According to an embodiment of the method, the method further comprises mixing the particles with at least the following components to obtain a light-weight construction material: cement, lime and water. Preferably, the method further comprises mixing the particles with at least the following compounds and a foam to obtain a light-weight construction material: cement, lime and water. The light-weight construction material comprises the features with a high compressive strength so that it can be used for the construction of load-bearing walls of buildings, for example, with high thermal and acoustic insulation. The aluminum and the polymer are preferably mixed in the required proportion with the following components: cement, lime and water. The power product component has the advantage that little or no sand needs to be added to the light-weight construction material.

According to an embodiment of the method, the aluminum reacts with the lime and generates a significant amount of hydrogen as a foaming agent in the light-weight construction material. Lime comprises the compound calcium hydroxide. The reaction reads as follows:

2 Al + 3 Ca(OH)₂ + 6 H₂O → 3 CaO · Al₂O₃ · 6 H₂O + 3 H2

The proportion of aluminum in the light-weight construction material has to be calculated to ensure an efficient bonding process of the light-weight construction material.

According to a further embodiment of the method, the method is free of a purification step. This means that the power product component is pulverized directly into the form of particles and the particles are then mixed directly with the compounds to obtain the light-weight construction material. The aluminum and the polymer in the power product component are firmly bonded together, making it difficult to separate them. No purification step and no separation step are required in the method, thus a separation of the polymer and the aluminum in the power product component is not necessary. This leads to a particularly cost- and time-effective and environmentally friendly method. In addition, all components of the power product components are advantageously part of the light-weight construction material.

According to an embodiment, the method for producing a light-weight construction material comprises the following steps:
- providing a power product component, wherein the power product component comprises at least a polymer and aluminum,
- pulverizing the power product components to form particles, and
- mixing the particles with at least the following compounds: cement, lime and water to obtain a light-weight construction material.

According to a further embodiment of the method, the power product component is selected from the following group: high voltage bushing element, dry transformer coil and insulator component. For example, the power product component is a high voltage electrical insulation with a conductor.

According to the embodiment of the method, the power product component comprises organic materials other than polymers and inorganic materials other than aluminum. The inorganic materials are, for example, a silica filler, a porcelain, wollastonite, quartz flour and glass fiber meshes. The organic material is, for example, a crepe paper, cellulose and other polymer films. Preferably, the organic materials and inorganic materials remain contained in the obtained light-weight construction material. Advantageously, the organic materials and the inorganic materials are reinforcing phases in the obtained light-weight construction material.

According to the embodiment of the method, the power product component comprises a silica filler, alumina filler, wollastonite and/or crepe paper. The light-weight construction material preferably comprises the silica filler, wollastonite and/or the crepe paper. Advantageously, no purification step is carried out in the method. This means that all of the materials of the power product component are part of the light-weight construction material. Advantageously, the silica filler, alumina filler, wollastonite and/or crepe paper are reinforcing phases in the obtained light-weight construction material.

According to the embodiment of the method, the light-weight construction material is a light-weight concrete formulation. Preferably, the light-weight construction material is a cellular concrete, also called "autoclaved aerated concrete". The light-weight construction material comprises aluminum and the aluminum is advantageously an expansion agent for the formation of gas bubbles during production of the light-weight concrete formulation. Autoclaved aerated concrete (AAC) is a lightweight, precast, cellular concrete building material, eco-friendly, suitable for producing concrete-like blocks.

According to the embodiment of the method, the power product component has already been used. In other words, the power product component is a scrap power product component. Advantageously, full recycling reuse of scrap power product components, for example scrap insulation composites with conductive elements, into valuable products, for example into light-weight construction materials, is achieved. The already used power product components are advantageously converted into valuable products such as a light-weight construction material, while also using less aluminum as an expansion agent so that all recycled power product components can be reused in one process. In other words, the power product component is recycled.

Polymers are the dominant electrically insulating materials used in power product components, for example in high voltage electrical equipment. However, these materials are synthesized from fossil-based raw materials and nowadays are not considered to be recyclable due to strong bonding crosslinking networks existing after the curing process. Traditionally, waste treatment of these materials is mainly focused on landfilling and end-of-life incineration. These treatment methods lead to a huge waste of resources and cause secondary environmental pollution. Therefore, the scrapped power product components are converted into a valuable product, while also using less aluminum powder (as an expansion agent), so that all recycled products can be reused in one process. Advantageously, the power product component is recycled and the CO₂ emission is reduced.

According to the embodiment of the method, after batching the particles with the compounds in to obtain a slurry, foam generated with a foam generator is added to produce a mixture and heated up to a temperature between 150°C and 250°C. Preferably, the mixture is heated up to a temperature between at least 150°C and at most 200°C. The temperature should be rather low, as otherwise the compounds in the power product component, for example cellulose, may be destroyed. Heating takes place under an autoclave process, for example. In other words, the mixture is heated up in an autoclave. Preferably, the temperature is maintained for at least 30 minutes to at most 24 hours. In addition, preferably, the method to obtain the light-weight construction material is carried out at normal pressure.

According to the embodiment of the method, a median diameter of the particles of aluminum and the particles of the polymer is not larger than 150 micrometers. In particular, the median diameter of the particles of aluminum and the particles of the polymer is not larger than 100 micrometers. Preferably, the median diameter of the particle is between at least 45 µm to at most 90 µm. Advantageously, the aluminum particles are free and not in agglomerates, so that their reactivity is not disturbed.

According to the embodiment of the method, at least one of the following compounds is added to the particles: gypsum, sand, fly ash, surface active agents, aluminum or a combination thereof. The amount of sand can be greatly reduced because the light-weight construction material already contains a filler, for example silica or alumina, in polymer. Preferably no sand is required for the method for producing a light-weight construction material. In addition, aluminum is only additionally added if the amount of aluminum in the power product component is too low. The exact proportion can be set as required. For example, one cubic meter of light-weight construction material comprises 250 kilogram sand and/or polymer and 0.5 kilogram aluminum.

According to the embodiment of the method, the polymer is selected from the following group: epoxy polymer, silicone, polysiloxane, polyurethanes and combinations thereof. Preferably, the polymer is an epoxy polymer or an epoxy composite.

In sum, the method advantageously produces a light-weight construction material, which is not claimed, with aluminum and a polymer obtained from a power product component, for example a scrapped or an already used power product component. The power product component comprises at least an aluminum compound and the polymer. The power product component can be pulverized without prior separation. The obtained particles are mixed with the required proportion with the fresh compounds used in manufacturing of a light-weight construction material, for example cellular concrete. Thus, a green, highly efficient and value-adding way of recovering power product components from the perspective of environmental protection in the broadest sense is obtained. The waste-to-energy-based recycling and incineration is improved. In addition, the aluminum acts as a foaming agent in the production of the light-weight construction material.

In other words, the method advantageously leads to the recycling of scrap material containing aluminum, mostly in a form of foils and types, and that aluminum is acting as a foaming agent in manufacturing of light-weight concretes. Thus, scrap material, for example scrap polymeric composites, can be recycled and as well the usage of aluminum powder, that is used in the method, can be eliminated or reduced.

In addition, further materials such as polymeric materials and quartz flour as an epoxy resin filler are, for example, present in the power product component and thus also in the light-weight construction material, constituting a mechanically reinforcing phase for the light-weight construction material.

Moreover, a non-claimed light-weight construction material is described which is produced by the method described herein above. Therefore, the features described in connection with the method are also applicable for the light-weight construction material and vice versa.

According to a non-claimed example of the light-weight construction material, the light-weight construction material comprises the following compounds: cement, lime, water, particles of aluminum and particles of a polymer. The aluminum can be in the form of aluminum foil, aluminum filler, aluminum powder, aluminum strips, aluminum paste, aluminum compound, aluminum particles and combinations thereof. Advantageously the aluminum is an expansion agent for the formation of gas bubbles during the method of the light-weight construction material. The polymer advantageously replaces sand in the construction material.

According to a further non-claimed example of the light-weight construction material, the concentration of the particles of the polymer in the light-weight construction material is at least 0.1 wt%. Preferably, the concentration of the polymer in the light-weight construction material is at least 1 wt%.

For example, the polymer is an epoxy polymer. This concentration constitutes a mechanically reinforcing phase for light-weight construction materials.

According to a further non-claimed example of the light-weight construction material, the median diameter of the particles of the aluminum and the particles of the polymer is not larger than 100 µm. Preferably, the median diameter of the particles of the aluminum and the particles of the polymer is between at least 45 µm and at most 90 µm. This advantageously leads to a high reactivity of the particles of aluminum in the light-weight construction material. The particles of aluminum can react with calcium hydroxide and generate a significant amount of hydrogen as a foaming agent in the light-weight construction material. This leads to a light and permeable light-weight construction material.

According to a further non-claimed example of the light-weight construction material, the particles of aluminum and the particles of the polymer are part of a power product component. Preferably, the power product component is an already used power product component and comprises at least aluminum and the polymer. The aluminum can be present in the power product component in the form of aluminum strips, aluminum paste, aluminum foil or aluminum powder. The polymer is preferably an epoxy polymer.

According to a further non-claimed example of the light-weight construction material, the light-weight construction material comprises at least one of the following compounds: quartz flour, gypsum, sand, fly ash, wollastonite, surface active agents, glass fiber meshes, silica filler and/or crepe paper. Preferably, the quartz flour can be an epoxy resin filler which may be present in the power product component and advantageously can constitute a mechanically reinforcing phase for the light-weight construction material. The surface active agent is, for example, sodium lauryl sulphate, sodium lauryl ether sulphate, alcohol ethoxy sulphate, alpha olefin sulfonate, sodium oleate, sulphanol, cetyltrimethyl ammonium bromide, cetrimide, neopor or combinations thereof.

The light-weight construction material , which is not claimed, can be advantageously used for the construction of load-bearing walls of buildings, with high thermal and acoustic insulation. In addition, the light-weight construction material can be free of sand and no, or less, additional aluminum component has to be added. Further advantageous embodiments and developments of the method for producing a light-weight construction material and the light-weight construction material will become apparent from the embodiments described below in connection with the figures.

The accompanying figures are included to provide a further understanding. In the figures elements of the same structure and/or functionality may be referenced by the same reference signs. It is to be understood that the embodiments shown in the figures are illustrative representations and are not necessarily drawn to scale.
Figure 1 shows schematic method stages of the method for producing a light-weight construction material according to an exemplary embodiment.
Figures 2 and 3 each show a schematic view of a light-weight construction material according to an exemplary embodiment.

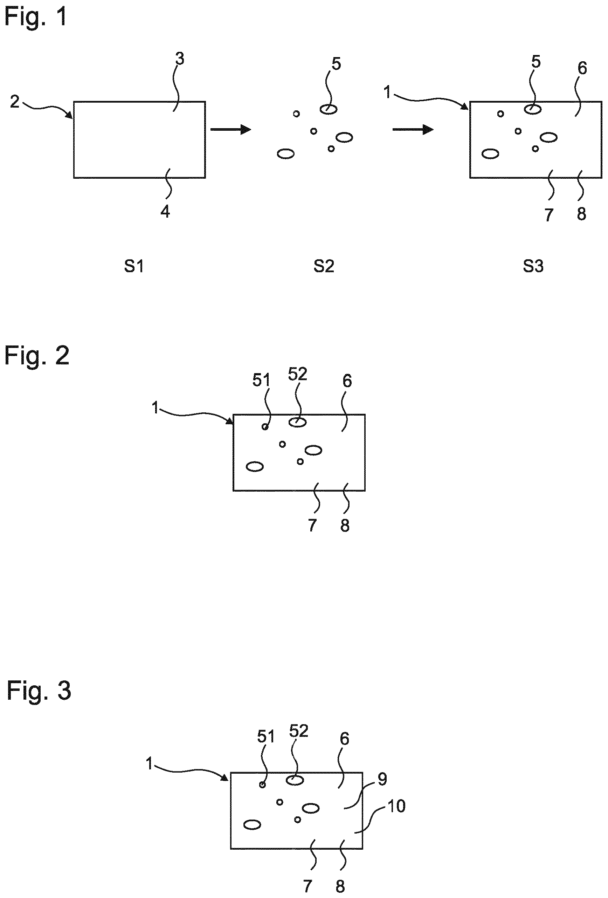

In a first method step S1 in Figure 1, a power product component 2 is provided wherein the power product component 2 comprises at least a polymer 3 and aluminum 4 according to an exemplary embodiment. The power product component 2 is selected from the following group: high voltage bushing element, dry transformer coil and insulator component. The power product component 2 can comprise further materials such as organic materials other than polymers 3 and inorganic materials other than aluminum 4**.** For example, the power product component 2 comprises silica filler, glass fiber meshes, quartz flour, wollastonite and/or crepe paper. For example, the power product component 2 has already been used. This means, for example, that the power product component 2 is a scrap and is recycled. Aluminum 4 is present in the power product component 2 in the form of aluminum strips, aluminum paste, aluminum foil or aluminum powder. It can also be present as an aluminum element or in an aluminum compound.

In a second method step S2, the power product component 2 is pulverized to form particles. The pulverization can include mixing, milling, grinding and crushing, depending on how large the particles should be. A median diameter of the particles is not larger than 100 µm. The form of the particles can differ, they can be round, edgy or oval. The polymer 3 is, for example, an epoxy polymer. In the whole method, no purification step is required.

Afterwards, in a third method step S3, the particles 5 are mixed with at least the following compounds: cement 6, lime 7 and water 8, to obtain a light-weight construction material **1.** The light-weight construction material 1 is a light-weight concrete formulation. The aluminum 4 and the lime 7 react to form hydrogen as a foaming agent. After batching the particles with the compounds in to obtain a slurry, foam generated with a foam generator is added to produce a mixture. The mixture is heated up to a temperature between at least 150°C and at most 250°C at normal pressure, 1013 hPa. In particular, the mixture is heated up to a temperature between at least 150 °C and at most 200 °C. In addition, additional compounds can be added to the light-weight construction material 1, for example gypsum, sand, fly ash, surface active agents, aluminum 4 or a combination thereof. Aluminum 4 is only added if the amount of aluminum 4 of the power product component 2 is too small for the application of the light-weight construction material 1.

In Figure 2 a cross-section of a light-weight construction material 1 according to an exemplary embodiment is shown. The light-weight construction material 1 comprises the following compounds: cement 6, lime 7, water 8, particles of aluminum 51 and particles of a polymer 52. The concentration of the particles of the polymer 52 in the light-weight construction material 1 is at least 0.1 wt%. The median diameter of the particles of aluminum 51 and the particles of the polymer 52 is not larger than 100 µm.

In Figure 3 a cross-section of a light-weight construction material 1 according to an exemplary embodiment is shown. The light-weight construction material 1 of Figure 3 differs from the light-weight construction material 1 of Figure 2 only in their composition. The light-weight construction material 1 of Figure 3 comprises further compounds, for example gypsum 9 and sand 10. The particles of aluminum 51 and the particles of the polymer 52 are part of a power product component 2. In addition, further compounds can be part of the light-weight construction material 1, for example, quartz flour, fly ash, wollastonite, surface active agents, silica and/or crepe paper. Moreover, aluminum 4 can additionally be added to the light-weight construction material 1.

The features and embodiments described in connection with the figures can be combined with each other according to further embodiments, even if not all combinations are explicitly described. Furthermore, the embodiments described in connection with the figures may alternatively or additionally comprise further features as described in the general part. The invention is not limited by the description based on the embodiments herein, rather the invention encompasses any novel features as well as any combination of features, which includes in particular any combination of features in the patent claims.

### Reference Signs

- 1: light-weight construction material
- 2: power product component
- 3: polymer
- 4: aluminum
- 6: cement
- 7: lime
- 8: water
- 9: gypsum
- 10: sand
- 51: particles of alumina
- 52: particles of polymer
- S1: method step 1
- S2: method step 2
- S3: method step 3

## Claims

1. Method for producing a light-weight construction material (1) comprising the following steps:
- providing a power product component (2), wherein the power product component (2) comprises at least a polymer (3) and aluminum (4),
- pulverizing the power product component (2) to form particles (5), and
- mixing the particles (5) with at least the following compounds to obtain a light-weight construction material (1): cement (6), lime (7) and water (8).

2. Method for producing a light-weight construction material (1) according to the preceding claim,
wherein the power product component (2) is selected from the following group: high voltage bushing element, dry transformer coil and insulator component.

3. Method for producing a light-weight construction material (1) according to one of the preceding claims,
wherein the power product component (2) comprises organic materials other than polymers (3) and inorganic materials other than aluminum (4).

4. Method for producing a light-weight construction material (1) according to one of the preceding claims,
wherein the power product component (2) comprises a silica filler, alumina filler, wollastonite and/or crepe paper.

5. Method for producing a light-weight construction material (1) according to one of the preceding claims,
wherein the light-weight construction material (1) is a light-weight concrete formulation.

6. Method for producing a light-weight construction material (1) according to one of the preceding claims,
wherein the power product component (2) has already been used.

7. Method for producing a light-weight construction material (1) according to one of the preceding claims,
wherein after mixing the batching the particles with the compounds in to obtain a slurry, foam generated with a foam generator is added to produce a mixture, the mixture is heated up to a temperature between at least 150 °C and at most 250 °C.

8. Method for producing a light-weight construction material (1) according to one of the preceding claims,
wherein a median diameter of the particle is not larger than 100 micrometers.

9. Method for producing a light-weight construction material (1) according to one of the preceding claims,
wherein at least one of the following compounds is added to the particles: gypsum, sand, fly ash, surface active agents, aluminum (4) or a combination thereof.

10. Method for producing a light-weight construction material (1) according to one of the preceding claims,
wherein the polymer (3) is selected from the following group: epoxy polymer, silicone, polysiloxane, polyurethanes and combinations thereof.

## Patentansprüche

1. Verfahren zur Herstellung eines Leichtbaumaterials (1), das die folgenden Schritte umfasst:
- Bereitstellen einer Leistungsproduktkomponente (2), wobei die Leistungsproduktkomponente (2) mindestens ein Polymer (3) und Aluminium (4) umfasst,
- Pulverisieren der Leistungsproduktkomponente (2), um Partikel (5) zu bilden, und
- Mischen der Partikel (5) mit mindestens den folgenden Verbindungen, um ein Leichtbaumaterial (1) zu erhalten: Zement (6), Kalk (7) und Wasser (8).

2. Verfahren zur Herstellung eines Leichtbaumaterials (1) nach dem vorhergehenden Anspruch,
wobei die Leistungsproduktkomponente (2) aus der folgenden Gruppe ausgewählt ist: Hochspannungs-Durchführungselement, Trockentransformatorspule und Isolatorkomponente.

3. Verfahren zur Herstellung eines Leichtbaumaterials (1) nach einem der vorhergehenden Ansprüche,
wobei die Leistungsproduktkomponente (2) andere organische Materialien als Polymere (3) und andere anorganische Materialien als Aluminium (4) umfasst.

4. Verfahren zur Herstellung eines Leichtbaumaterials (1) nach einem der vorhergehenden Ansprüche,
wobei die Leistungsproduktkomponente (2) einen Siliziumdioxid-Füllstoff, Aluminiumoxid-Füllstoff, Wollastonit und/oder Krepppapier umfasst.

5. Verfahren zur Herstellung eines Leichtbaumaterials (1) nach einem der vorhergehenden Ansprüche,
wobei das Leichtbaumaterial (1) eine Leichtbetonformulierung ist.

6. Verfahren zur Herstellung eines Leichtbaumaterials (1) nach einem der vorhergehenden Ansprüche,
wobei die Leistungsproduktkomponente (2) bereits verwendet worden ist.

7. Verfahren zur Herstellung eines Leichtbaumaterials (1) nach einem der vorhergehenden Ansprüche,
wobei nach Mischen der Zumessung an Partikeln mit den Verbindungen darin, um eine Aufschlämmung zu erhalten, Schaum, der mit einem Schaumerzeuger erzeugt wurde, zugegeben wird, um eine Mischung herzustellen, und die Mischung auf eine Temperatur zwischen mindestens 150 °C und höchstens 250 °C erwärmt wird.

8. Verfahren zur Herstellung eines Leichtbaumaterials (1) nach einem der vorhergehenden Ansprüche,
wobei ein Median des Partikeldurchmessers nicht größer als 100 Mikrometer ist.

9. Verfahren zur Herstellung eines Leichtbaumaterials (1) nach einem der vorhergehenden Ansprüche,
wobei den Partikeln mindestens eine der folgenden Verbindungen zugegeben wird: Gips, Sand, Flugasche, oberflächenaktive Mittel, Aluminium (4) oder eine Kombination davon.

10. Verfahren zur Herstellung eines Leichtbaumaterials (1) nach einem der vorhergehenden Ansprüche,
wobei das Polymer (3) aus der folgenden Gruppe ausgewählt ist: Epoxypolymer, Silikon, Polysiloxan, Polyurethane und Kombinationen davon.

## Revendications

1. Procédé de fabrication d'un matériau de construction léger (1) comprenant les étapes suivantes :
- la fourniture d'un composant de produit d'énergie (2), dans lequel le composant de produit d'énergie (2) comprend au moins un polymère (3) et de l'aluminium (4),
- la pulvérisation du composant de produit d'énergie (2) pour former des particules (5), et
- le mélange des particules (5) avec au moins les composés suivants pour obtenir un matériau de construction léger (1) : ciment (6), chaux (7) et eau (8).

2. Procédé de fabrication d'un matériau de construction léger (1) selon la revendication précédente,
dans lequel le composant de produit d'énergie (2) est sélectionné dans le groupe suivant : élément de traversée haute tension, bobine de transformateur sèche et composant isolant.

3. Procédé de fabrication d'un matériau de construction léger (1) selon l'une des revendications précédentes, dans lequel le composant de produit d'énergie (2) comprend des matériaux organiques autres que des polymères (3) et des matériaux inorganiques autres que l'aluminium (4).

4. Procédé de fabrication d'un matériau de construction léger (1) selon l'une des revendications précédentes, dans lequel le composant de produit d'énergie (2) comprend une charge de silice, une charge d'alumine, de la wollastonite et/ou du papier crêpé.

5. Procédé de fabrication d'un matériau de construction léger (1) selon l'une des revendications précédentes, dans lequel le matériau de construction léger (1) est une formulation de béton léger.

6. Procédé de fabrication d'un matériau de construction léger (1) selon l'une des revendications précédentes, dans lequel le composant de produit d'énergie (2) a déjà été utilisé.

7. Procédé de fabrication d'un matériau de construction léger (1) selon l'une des revendications précédentes, dans lequel après mélange du dosage des particules avec les composés pour obtenir une pâte, de la mousse générée avec un générateur de mousse est ajoutée pour produire un mélange, le mélange est chauffé à une température comprise entre au moins 150 °C et au plus 250 °C.

8. Procédé de fabrication d'un matériau de construction léger (1) selon l'une des revendications précédentes, dans lequel un diamètre médian de la particule n'est pas supérieur à 100 micromètres.

9. Procédé de fabrication d'un matériau de construction léger (1) selon l'une des revendications précédentes, dans lequel au moins un des composés suivants est ajouté aux particules : gypse, sable, cendres volantes, agents tensioactifs, aluminium (4) ou une combinaison de ces derniers.

10. Procédé de fabrication d'un matériau de construction léger (1) selon l'une des revendications précédentes, dans lequel le polymère (3) est sélectionné dans le groupe suivant : polymère époxy, silicone, polysiloxane, polyuréthanes et des combinaisons de ces derniers.
